# EUROPÄISCHE PATENTANMELDUNG

(11) **EP 2 404 876 A1**
(43) Veröffentlichungstag der Anmeldung: **11.01.2012**
(21) Anmeldenummer: 11165149.3
(22) Anmeldetag: 06.05.2011
(51) Int. Cl.: C02F 1/44, C02F 3/12

(54) **Optimiertes Verfahren und Vorrichtung zur Behandlung von Wäschereiabwässern**

(30) Priorität: 07.07.2010 DE 102010026491
(71) Anmelder: Enviro-Chemie GmbH, 64380 Rossdorf (DE)
(72) Erfinder: Canga Rodriguez, José, 60326 Frankfurt am Main (DE); Müller, Claudia, 64673 Zwingenberg (DE)
(74) Vertreter: Köllner, Malte

(57) **Zusammenfassung**

Die Erfindung betrifft die Behandlung von Abwasser (100) unter Verwendung eines Bioreaktors (118). Das erwärmte Abwasser (100) der Wäscherei muss vor der Einleitung in den Bioreaktor (118) abgekühlt werden. Dabei ermöglicht die vorliegende Erfindung eine nahezu vollständige Rückführung der zur Kühlung abgeleiteten Wärmeenergie in die Wäscherei (102). Vor der Rückführung in die Wäscherei wird das Waschwasser oder das Spülwasser in einen ersten wärmeisolierten Tank (114) zwischengespeichert. Das in dem ersten wärmeisolierten Tank (114) zwischengespeicherte Waschwasser bzw. Spülwasser wird durch den ersten Wärmetauscher (110) zirkuliert, so dass ein Transfer von Wärmeenergie aus dem Abwasser in das Waschwasser bzw. das Spülwasser stattfindet.

## Beschreibung

### Gebiet der Erfindung

Die Erfindung betrifft die Behandlung von Abwasser aus Wäschereien unter Verwendung eines Bioreaktors und einer Umkehrosmose. Das erwärmte Abwasser der Wäscherei muss vor der Einleitung in den Bioreaktor abgekühlt werden. Dabei ermöglicht die vorliegende Erfindung eine nahezu vollständige Rückführung der zur Kühlung abgeleiteten Wärmeenergie in die Wäscherei. Darüber hinaus verfügt diese optimierte Ausführung des gesamten Wasser-Abwasser-Systems über eine Schaumzerstörungseinrichtung.

### Stand der Technik

Die Druckschrift WO 02/04354 A1 offenbart eine Vorrichtung und ein Verfahren zur Behandlung von Wäschereiabwässern. Hierbei wird das Abwasser der Wäscherei bevor es in einen Bioreaktor eingeleitet wird mittels eines Wärmetauschers gekühlt. Ein erster Anteil des Filtrats wird durch den Wärmetauscher erwärmt und in die Wäscherei zurückgeführt. Eine Membranfiltrationseinheit dient der Behandlung eines zweiten Anteils des Filtrats mittels Umkehrosmose. Das hierbei entstehende Permeat wird ebenso zur Wiederverwendung in die Wäscherei zurückgeführt. Weiterhin entsteht bei der Umkehrosmose ein Konzentrat. Dieses wird aus der Vorrichtung ausgeleitet.

Der Wärmetauscher ermöglicht die Rückführung eines Teils der in dem Abwasser enthaltenen Wärmeenergie in die Wäscherei. Allerdings ist die kontinuierliche Abwasserzuführung zum Bioreaktor von der diskontinuierlichen Rückführung des Filtrats zur Wäscherei entkoppelt. Zwischen dem Volumenstrom des Abwassers und dem Volumenstrom des ersten Anteils des Filtrats besteht somit ein zeitlicher Verzug. Dies führt dazu, dass der erforderliche Transfer der Wärmeenergie von dem Abwasser in den ersten Teil des Filtrats nicht in jedem Betriebszustand gewährleistet werden kann. Ist es erforderlich, das Filtrat zwischenzuspeichern, geht weitere Wärmeenergie verloren.

### Aufgabe

Aufgabe der Erfindung ist es, eine Vorrichtung und ein Verfahren zur Behandlung des Abwassers einer Wäscherei unter Verwendung eines Bioreaktors anzugeben, derart dass die in dem Abwasser enthaltene Wärmeenergie - unter Vernachlässigung von Verlustwärme - möglichst vollständig in die Wäscherei zurückgeführt werden kann.

### Lösung

Diese Aufgabe wird durch die Erfindungen mit den Merkmalen der unabhängigen Ansprüche gelöst. Vorteilhafte Weiterbildungen der Erfindungen sind in den Unteransprüchen gekennzeichnet. Der Wortlaut sämtlicher Ansprüche wird hiermit durch Bezugnahme zum Inhalt dieser Beschreibung gemacht. Die Erfindung umfasst auch alle sinnvollen und insbesondere alle erwähnten Kombinationen von unabhängigen und/oder abhängigen Ansprüchen.

Eine naheliegende Lösung der oben genannten Aufgabe wäre eine Anlage, die das Abwasser der Wäscherei aufbereitet und gereinigt zurückführt. Wärmeverluste könnten dabei durch eine Isolierung der Anlage verhindert werden. Allerdings darf die Temperatur in einem Bioreaktor einen bestimmten Schwellwert nicht überschreiten. Das Abwasser muss daher vor der Einleitung in den Bioreaktor gekühlt werden.

Eine erfindungsgemäße Vorrichtung zur Behandlung von Abwasser einer Wäscherei mit einem Bioreaktor weist daher einen ersten Wärmetauscher zum Abkühlen des Abwassers auf. Das abgekühlte Abwasser wird in den Bioreaktor eingeleitet.

Die Vorrichtung umfasst weiterhin Mittel zur Rückführung eines variablen ersten Anteils eines durch die Behandlung mittels des Bioreaktors gewonnenen Filtrats zur Wiederverwendung als Waschwasser in die Wäscherei. Die nicht biologisch abbaubaren Bestandteile des Abwassers sind in dem Waschwasser noch enthalten. Organische Bestandteile hingegen wurden durch den Bioreaktor weitestgehend abgebaut.

Eine Membranfiltrationseinheit reinigt einen zweiten variablen Anteil des Filtrats mittels Umkehrosmose. Die Vorrichtung umfasst Mittel zur Rückführung eines durch die Umkehrosmose gewonnenen Permeats zur Wiederverwendung als Spülwasser in die Wäscherei. Da die Umkehrosmose dem zweiten Anteil des Filtrats gelöste anorganische Stoffe, wie etwa Salze, sowie restliche organische Stoffe entzieht, ist das Spülwasser weitestgehend frei von organischen und anorganischen Verunreinigungen.

Vor der Rückführung in die Wäscherei wird das Waschwasser oder das Spülwasser in einen ersten wärmeisolierten Tank zwischengespeichert. Die Vorrichtung umfasst Mittel zur Zirkulation des in dem ersten wärmeisolierten Tank zwischengespeicherten Waschwassers bzw. Spülwassers durch den ersten Wärmetauscher. Hierdurch wird das Waschwasser bzw. das Spülwasser erwärmt. Es kommt zu einem Transfer von Wärmeenergie aus dem Abwasser in das Waschwasser bzw. das Spülwasser. Das Abwasser kann somit vor der Einleitung in den Bioreaktor gekühlt werden, unter Minimierung der Wärmeverluste im gesamten System.

Erfindungsgemäß wird das Permeat vor der Wiederverwendung als Spülwasser mit einem variablen dritten Anteil des Filtrats verschnitten. Das heißt, der variable dritte Anteil des Filtrats wird dem Spülwasser hinzugefügt. Im Idealfall beträgt die Leitfähigkeit des Spülwassers nach dem Verschnitt zwischen 100 und 1500 µS/cm. Um dies zu gewährleisten, weist die Vorrichtung einen Leitfähigkeitsmesser auf, der die Leitfähigkeit des Spülwassers nach dem Verschnitt ermittelt. In Abhängigkeit davon wird der Volumenstrom des variablen dritten Anteils des Filtrats derart variiert, dass die Leitfähigkeit des Spülwassers nach dem Verschnitt in dem genannten Bereich liegt.

Eine Schaumzerstörungseinrichtung dient der Bekämpfung des in dem Bioreaktor entstehenden Schaums. Diese Einrichtung ist derart ausgebildet, dass der in dem Bioreaktor entstehende Schaum durch Aufsprühen des Abwassers und/oder durch Aufsprühen von Filtrat und/oder durch Aufsprühen von Frischwasser und/oder durch Regelung der Belüftung des Bioreaktors und/oder durch mechanische Zerstörung mittels mindestens einer beweglichen Vorrichtung und/oder durch Aufsprühen eines Entschäumers bekämpft wird.

Um die Kühlung des Abwassers zu verbessern, wird es vorzugsweise durch einen zusätzlichen, zweiten Wärmetauscher geleitet. Speichert der erste wärmeisolierte Tank das Spül- oder Waschwasser zwischen, so wird mittels des zweiten Wärmetauschers das Spül- oder Waschwasser erwärmt. Vorzugsweise speichert hingegen der erste wärmeisolierte Tank das Spülwasser zwischen.

Um eine weitere Minimierung der Wärmeverluste zu erreichen, wird nicht nur der erste Wärmetauscher sondern auch der zweite Wärmetauscher aus einem wärmeisolierten Tank gespeist. Diese alternative Ausführungsform umfasst daher einen zweiten wärmeisolierten Tank, in dem das Waschwasser zwischengespeichert wird. Das Spülwasser wird in dem ersten wärmeisolierten Tank zwischengespeichert. Das in dem zweiten wärmeisolierten Tank zwischengespeicherte Waschwasser zirkuliert durch den zweiten Wärmetauscher. Hierdurch findet ein Transfer von Wärmeenergie aus dem Abwasser in das Waschwasser statt, so dass das Waschwasser erwärmt wird.

Um den Pegelstand des ersten wärmeisolierten Tanks zu regulieren, wird vorzugsweise bei zu hohem Pegelstand, d.h. wenn die Füllhöhe des ersten wärmeisolierten Tanks über einen Maximalwert steigt, Spülwasser ausgeleitet. Bei zu niedrigem Pegelstand des ersten wärmeisolierten Tanks, d.h. wenn die Füllhöhe des ersten wärmeisolierten Tanks unter einen Minimalwert fällt, wird hingegen Frischwasser zugeführt. Auf gleiche Art kann der Pegelstand des zweiten wärmeisolierten Tanks reguliert werden: Bei zu hohem Pegelstand wird Waschwasser ausgeleitet. Ein zu niedriger Pegelstand kann durch die Zufuhr von Frischwasser ausgeglichen werden.

Im Folgenden werden einzelne Verfahrensschritte näher beschrieben. Die Schritte müssen nicht notwendigerweise in der angegebenen Reihenfolge durchgeführt werden, und das zu schildernde Verfahren kann auch weitere, nicht genannte Schritte aufweisen.

Ein erfindungsgemäßes Verfahren zur Behandlung von Abwasser einer Wäscherei umfasst die Schritte des Abkühlens des Abwassers mittels eines ersten Wärmetauschers, der Behandlung des Abwassers mittels eines Bioreaktors, der Rückführung eines variablen ersten Anteils eines durch die Behandlung mittels des Bioreaktors gewonnenen Filtrats zur Wiederverwendung als Waschwasser in die Wäscherei, des Reinigens eines variablen zweiten Anteils des Filtrats mittels Umkehrosmose und der Rückführung eines durch die Umkehrosmose gewonnenen Permeats zur Wiederverwendung als Spülwasser in die Wäscherei. Dabei wird das Waschwasser oder das Spülwasser in einem ersten wärmeisolierten Tank zwischengespeichert. Das in dem ersten wärmeisolierten Tank zwischengespeicherte Waschwasser bzw. Spülwasser wird mittels Zirkulation durch den ersten Wärmetauscher erwärmt. Vor der Wiederverwendung als Spülwasser wird das Permeat mit einem variablen dritten Anteils des Filtrats verschnitten. Dabei wird der Volumenstrom des variablen dritten Anteils des Filtrats in Abhängigkeit von einer mittels eines Leitfähigkeitsmessers ermittelten Leitfähigkeit des Spülwassers derart variiert, dass die Leitfähigkeit des Spülwassers zwischen 100 und 1500 µS/cm beträgt. Der in dem Bioreaktor entstehende Schaum wird durch Aufsprühen des Abwassers und/oder durch Aufsprühen von Filtrat und/oder durch Aufsprühen von Frischwasser und/oder durch Regelung der Belüftung des Bioreaktors und/oder durch mechanische Zerstörung mittels mindestens einer beweglichen Vorrichtung und/oder durch Aufsprühen eines Entschäumers bekämpft.

Die Merkmale bevorzugter Ausführungsformen des erfindungsgemäßen Verfahrens zur Behandlung von Abwasser einer Wäscherei entsprechen den oben beschriebenen Merkmalen von Ausführungsformen der erfindungsgemäßen Vorrichtung zur Behandlung von Abwasser einer Wäscherei.

Weitere Einzelheiten und Merkmale ergeben sich aus der nachfolgenden Beschreibung von bevorzugten Ausführungsbeispielen in Verbindung mit den Unteransprüchen. Hierbei können die jeweiligen Merkmale für sich alleine oder zu mehreren in Kombination miteinander verwirklicht sein. Die Möglichkeiten, die Aufgabe zu lösen, sind nicht auf die Ausführungsbeispiele beschränkt.

So umfassen beispielsweise Bereichsangaben stets alle - nicht genannten - Zwischenwerte und alle denkbaren Teilintervalle.

Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Im Einzelnen zeigt:
- Fig. 1: die Gesamtansicht einer Vorrichtung zur Behandlung des Abwassers einer Wäscherei;
- Fig. 2: eine erste Variante einer Schaumzerstörungs-Einrichtung;
- Fig. 3: eine zweite Variante einer Schaumzerstörungs-Einrichtung;
- Fig. 4: eine dritte Variante einer Schaumzerstörungs-Einrichtung;
- Fig. 5: eine vierte Variante einer Schaumzerstörungs-Einrichtung;
- Fig. 6: eine fünfte Variante einer Schaumzerstörungs-Einrichtung mit einer beweglichen Vorrichtung zur mechanischen Schaumzerstörung; und
- Fig. 7: eine bewegliche Vorrichtung zur mechanischen Schaumzerstörung.

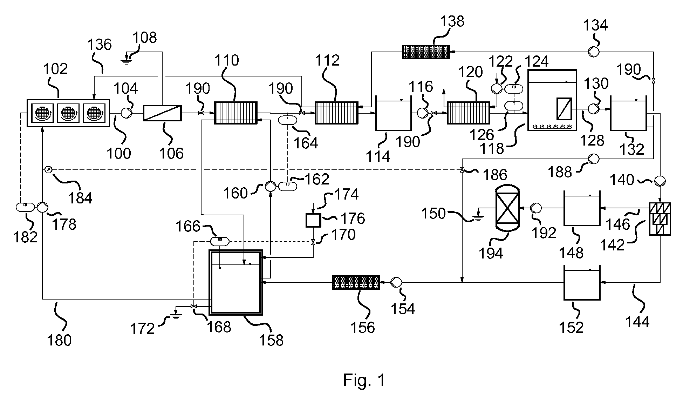

Bei dem in Fig. 1 dargestellten bevorzugten Ausführungsbeispiel wird das Abwasser 100 der Wäscherei 102 zunächst von einer ersten Pumpe 104 durch eine Trennvorrichtung 106 gefördert. Die Trennvorrichtung 106 ist vorzugsweise mechanischer Art, beispielsweise ein Sieb, und filtert Feststoffe, wie zum Beispiel Stoffpartikel, aus dem Abwasser 100. Die Feststoffe werden über einen ersten Ablauf 108 aus der Vorrichtung ausgeleitet.

Nachdem das mittels der Trennvorrichtung 106 von Feststoffen befreite Abwasser 100 der Reihe nach in einem ersten Wärmetauscher 110 und in einem zweiten Wärmetauscher 112 abgekühlt wurde, gelangt es in einen ersten Zwischenspeicher 114. Hinreichend ist eine Abkühlung des Abwassers 100 auf eine Temperatur aus dem Bereich von 35 bis 40°C. Vorzugsweise wird das Abwasser 100 aber so stark abgekühlt, dass es unmittelbar in den Bioreaktor eingeleitet werden kann. Angestrebt wird daher eine Temperatur aus dem Bereich zwischen 25 und 35°C, vorzugsweise 30°C.

Eine zweite Pumpe 116 fördert das Abwasser 100 aus dem ersten Zwischenspeicher 114 in den Bioreaktor 118. Vor Eintritt in den Bioreaktor durchläuft das Abwasser 100 einen dritten Wärmetauscher 120. Dieser dient als Rückfallebene, falls die Kühlleistung des ersten Wärmetauschers 110 und des zweiten Wärmetauschers 112 nicht genügen sollte, das Abwasser 100 hinreichend zu kühlen.

Eine dritte Pumpe 122 fördert Kühlwasser, das von einer externen Quelle bereitgestellt wird, d.h. von einer Quelle die nicht Bestandteil der Vorrichtung ist, durch den dritten Wärmetauscher 120. Hierdurch kommt es zu einem Transfer von Wärmeenergie aus den Abwasser 100 in das Kühlwasser.

Zur Regelung des Volumenstroms des Kühlwassers wird die Förderleistung der dritten Pumpe 122 von einem ersten Frequenzumrichter 124 gesteuert. Dieser ist mit einem ersten Temperaturfühler 126 gekoppelt, der die Temperatur des Abwassers 100 nach Austritt aus dem dritten Wärmetauscher 120 und vor dem Eintritt in den Bioreaktor 118 misst. Vorzugsweise wird der Volumenstrom des Kühlwassers so geregelt, dass die Temperatur des Abwassers 100 an dem ersten Temperaturfühler 126 zwischen 25 und 35°C, vorzugsweise 30°C beträgt.

Der Bioreaktor 118 entzieht dem eingeleiteten Abwasser 100 organische Bestandteile. Das mittels des Bioreaktors 118 gewonnene Filtrat 128 enthält somit vorwiegend nicht biologisch abbaubare Bestandteile.

Vorzugsweise handelt es sich bei dem Bioreaktor um einen Membranbioreaktor (MBR), mit einer Membran zur Trennung von Filtrat und Biomasse. Verschiedene Varianten eines Membranbioreaktors können eingesetzt werden. So kann die Membran zum Beispiel als getauchte Membran in dem Bioreaktor eingeschlossen sein, sich als getauchte Membran in einem nachgeschalteten Behälter befinden oder außerhalb des Bioreaktors trocken aufgestellt sein.

Eine vierte Pumpe 130 fördert das Filtrat 128 aus dem Bioreaktor 118 in einen zweiten Zwischenspeicher 132.

Von dort fördert eine fünfte Pumpe 134 einen variablen ersten Anteil des Filtrats 128 zur Wiederverwendung als Waschwasser 136 in die Wäscherei 102. Dabei durchfließt der variable erste Anteil des Filtrats 128 neben einer ersten Entkeimungsvorrichtung 138 den zweiten Wärmetauscher 112. Das Abtöten von Keimen in der Entkeimungsvorrichtung 138 geschieht beispielsweise durch Ozonierung, UV-Bestrahlung oder den Einsatz von Chlor. In dem zweiten Wärmetauscher 112 erfolgt ein Transfer von Wärmeenergie aus dem Abwasser 100 in den variablen ersten Anteil des Filtrats 128, der sich hiernach zur Verwendung als Waschwasser 136 eignet. Der zweite Wärmetauscher erwärmt dabei den variablen ersten Anteil des Filtrats 128 vorzugsweise so stark, dass möglichst wenig zusätzliche Wärmeenergie von Extern zugeführt werden muss.

Eine sechste Pumpe 140 fördert einen variablen zweiten Anteil des Filtrats 128 in die Membranfiltrationseinheit 142, in der das Prinzip der Umkehrosmose zur Anwendung kommt. Die Membranfiltrationseinheit 142 trennt den zweiten Anteil des Filtrats 128 in einen Konzentratstrom 146 bestehend aus schwer biologisch abbaubaren anorganischen Bestandteilen sowie organischen Bestandteilen, die nicht im Membranbioreaktor entfernt wurden, und Permeat 144. Das Konzentrat 146 wird ausgeschieden und in einen dritten Zwischenspeicher 148 geleitet. Von dort förderte eine achte Pumpe das Konzentrat 146 in einen Ionentauscher, der das Konzentrat 146 derart aufbereitet, dass es mittels eines zweiten Ablaufs 150 aus der Vorrichtung ausgeleitet werden kann. Alternativ kann dieses Konzentrat zu Entsorgungszwecken verdampft werden.

Das in der Membranfiltrationseinheit 142 aus dem variablen zweiten Anteil des Filtrats 128 getrennte Permeat 144 gelangt in einen vierten Zwischenspeicher 152. Von dort fördert eine neunte Pumpe 154 das Permeat 144 durch eine zweite Entkeimungsvorrichtung 156 in den ersten wärmeisolierten Tank 158. Die zweite Entkeimungsvorrichtung 156 tötet Keime beispielsweise durch Ozonierung, UV-Bestrahlung oder den Einsatz von Chlor ab. Eine zehnte Pumpe 160 zirkuliert das in den ersten wärmeisolierten Tank 158 eingeleitete Permeat 144 durch den ersten Wärmetauscher 110. Dabei findet ein Transfer von Wärmeenergie aus dem Abwasser 100 in das zirkulierende Permeat 144 statt. Der erste Wärmetauscher erwärmt dabei das Permeat 144 vorzugsweise so stark, dass bei einer Wiederverwendung des Permeats als Spülwasser in der Wäscherei 102 möglichst wenig Wärmeenergie von Extern zugeführt werden muss.

Ein zweiter Frequenzumrichter 162 steuert die Förderleistung der zehnten Pumpe 160. Der zweite Frequenzumrichter ist mit einem zweiten Temperaturfühler 164 gekoppelt, der die Temperatur des aus dem ersten Wärmetauscher 110 austretenden Abwassers 100 misst. Liegt die Temperatur über einem Sollwert, wird die Förderleistung der zehnten Pumpe 160 erhöht, so dass sich der Volumenstrom des durch den ersten Wärmetauscher zirkulierenden Abwassers 100 erhöht. Infolgedessen steigt die Kühlleistung des ersten Wärmetauschers 110, d.h. die pro Zeiteinheit aus dem Abwasser in das zirkulierende Permeat 144 transferierte Wärmeenergie nimmt zu. Vorzugsweise führt jede Zunahme der Abweichung der mittels des zweiten Temperaturfühlers 164 gemessenen Temperatur von dem Sollwert zu einer Erhöhung der Förderleistung der zehnten Pumpe 160. Analog führt jede Abnahme der Abweichung der mittels des zweiten Temperaturfühlers 164 gemessenen Temperatur von dem Sollwert vorzugsweise zu einer Verringerung der Förderleistung der zehnten Pumpe 160. Der genannte Sollwert kann beispielsweise 30°C betragen. Auch ein beliebiger Sollwert aus einem Bereich von 25°C bis 40°C ist praktikabel.

Mittel zur Isolierung des ersten wärmeisolierten Tanks 158 verhindern weitestgehend, dass Verlustwärme an die Umgebung abgegeben wird.

Darüber hinaus weist der erste wärmeisolierte Tank 158 Mittel auf, die einen zu hohen und einen zu niedrigen Pegelstand des enthaltenen Permeats 144 verhindern. So wir der Pegelstand mittels einer Füllstandssonde 166 gemessen. Diese ist mit einem ersten Ventil 168 und mit einem zweiten Ventil 170 gekoppelt. Überschreitet der Pegelstand einen Maximalwert, öffnet die Füllstandssonde 166 das erste Ventil 168, so dass Permeat 144 über einen dritten Ablauf 172 aus der Vorrichtung abfließt. Unterschreitet der Pegelstand einen Minimalwert, öffnet die Füllstandssonde 166 ein zweites Ventil 170. Dies führt zu einer Einleitung von Frischwasser 174 in den ersten wärmeisolierten Tank 158. Dem Frischwasser 174 kann mittels einer Vorrichtung 176 bei Bedarf enthärtet werden.

Eine elfte Pumpe 178 fördert das in dem ersten wärmeisolierten Tank enthaltene erwärmte Permeat 144 als Spülwasser 180 in die Wäscherei 102. Die elfte Pumpe 178 ist mit einem dritten Frequenzumrichter 182 gekoppelt. Dieser empfängt Steuersignale aus der Wäscherei 102, so dass die Förderleistung der elften Pumpe 178 dem Bedarf der Wäscherei 102 an Spülwasser 180 angepasst werden kann.

Durch Verschneidung des Permeats 144 mit einem variablen dritten Anteil des Filtrats 128 ist es möglich, auch die Leitfähigkeit des Spülwassers 180 dem Bedarf der Wäscherei 102 anzupassen. Hierzu misst ein Leitfähigkeitsmesser 184, der mit einem dritten Ventil 186 gekoppelt ist, die Leitfähigkeit des Spülwassers 180. Die Leitfähigkeit des Spülwassers wird dadurch an die Anforderungen des Waschprozesses angepasst. Ergibt diese Messung, dass das Spülwasser 180 zu weich ist, bzw. das dessen Leitfähigkeit von obengenanntem Wert abweicht, öffnet der Leitfähigkeitsmesser 184 das dritte Ventil 186. In der Folge kann eine siebte Pumpe 188 den variablen dritten Anteil des Filtrats 128 fördern. Der variable dritte Anteil des Filtrats 128 wird um die Membranfiltrationseinheit 142 herumgeleitet und mit dem Permeat 144 verschnitten.

Das in Fig. 1 dargestellte Ausführungsbeispiel weist die folgenden Rohrleitungen auf: Eine Rohrleitung zwischen der Wäscherei 102 und der ersten Pumpe 104, eine Rohrleitung zwischen der ersten Pumpe 104 und der Trennvorrichtung 106, eine Rohrleitung zwischen der Trennvorrichtung 106 und dem ersten Ablauf 108, eine Rohrleitung zwischen der Trennvorrichtung 106 und einem Ventil 190, eine Rohrleitung zwischen letztgenanntem Ventil 190 und dem ersten Wärmetauscher 110, eine Rohrleitung mit dem zweiten Temperaturfühler 164 zwischen dem ersten Wärmetauscher 110 und einem Ventil 190, eine Rohrleitung zwischen letztgenanntem Ventil 190 und dem zweiten Wärmetauscher 112, eine Rohrleitung zwischen dem zweiten Wärmetauscher 112 und dem ersten Zwischenspeicher 114, eine Rohrleitung zwischen dem ersten Zwischenspeicher 114 und der zweiten Pumpe 116, eine Rohrleitung zwischen der zweiten Pumpe 116 und einem Ventil 190, eine Rohrleitung zwischen dem letztgenannten Ventil 190 und dem dritten Wärmetauscher 120, eine Rohrleitung mit dem ersten Temperaturfühler 126 zwischen dem dritten Wärmetauscher 120 und dem Bioreaktor 118, eine Rohrleitung zwischen einer Kühlwasserzufuhr und der dritten Pumpe 122, eine Rohrleitung zwischen der dritten Pumpe 122 und dem dritten Wärmetauscher 120, eine Rohrleitung zwischen dem dritten Wärmetauscher 120 und einem Kühlwasserablauf, eine Rohrleitung zwischen der Membran des Bioreaktors 118 und der vierten Pumpe 130, eine Rohrleitung zwischen der vierten Pumpe 130 und dem zweiten Zwischenspeicher 132, eine Rohrleitung zwischen dem zweiten Zwischenspeicher 132 und einem Ventil 190, eine Rohrleitung zwischen letztgenanntem Ventil 190 und der fünften Pumpe 134, eine Rohrleitung zwischen der fünften Pumpe 134 und der ersten Entkeimungsvorrichtung 138, eine Rohrleitung zwischen der ersten Entkeimungsvorrichtung 138 und dem zweiten Wärmetauscher 112, eine Rohrleitung zwischen dem zweiten Wärmetauscher 112 und der Wäscherei 102, eine Rohrleitung zwischen dem zweiten Zwischenspeicher 132 und der sechsten Pumpe 140, eine Rohrleitung zwischen der sechsten Pumpe 140 und der Membranfiltrationseinheit 142, eine Rohrleitung zwischen der Membranfiltrationseinheit 142 und dem dritten Zwischenspeicher 148, eine Rohrleitung zwischen dem dritten Zwischenspeicher 148 und der achten Pumpe 192, eine Rohrleitung zwischen der achten Pumpe 192 und dem Ionentauscher 194, eine Rohrleitung zwischen dem Ionentauscher 194 und dem zweiten Ablauf 150, eine Rohrleitung zwischen der Membranfiltrationseinheit 142 und dem vierten Zwischenspeicher 152, eine Rohrleitung zwischen dem vierten Zwischenspeicher 152 und der neunten Pumpe 154, eine Rohrleitung zwischen der neunten Pumpe 154 und der zweiten Entkeimungsvorrichtung 156, eine Rohrleitung zwischen der zweiten Entkeimungsvorrichtung 156 und dem ersten wärmeisolierten Tank 158, eine Rohrleitung zwischen dem ersten wärmeisolierten Tank 158 und der zehnten Pumpe 160, eine Rohrleitung zwischen der zehnten Pumpe 160 und dem ersten Wärmetauscher 110, eine Rohrleitung zwischen dem ersten Wärmetauscher 110 und dem ersten wärmeisolierten Tank 158, eine Rohrleitung zwischen einer Frischwasserzufuhr und der Dosiervorrichtung 176 für Enthärter, eine Rohrleitung zwischen der Dosiervorrichtung 176 für Enthärter und einem Ventil 190, eine Rohrleitung zwischen letztgenanntem Ventil 190 und dem ersten wärmeisolierten Tank 158, eine Rohrleitung zwischen dem ersten wärmeisolierten Tank 158 und der elften Pumpe 178, eine Rohrleitung zwischen der elften Pumpe 178 und der Wäscherei 102, eine Rohrleitung zwischen dem zweiten Zwischenspeicher 132 und der siebten Pumpe 188, eine Rohrleitung zwischen der siebten Pumpe 188 und einem Ventil 190 sowie eine Rohrleitung zwischen letztgenanntem Ventil 190 und der Rohrleitung zwischen dem vierten Zwischenspeicher 152 und der neunten Pumpe 154.

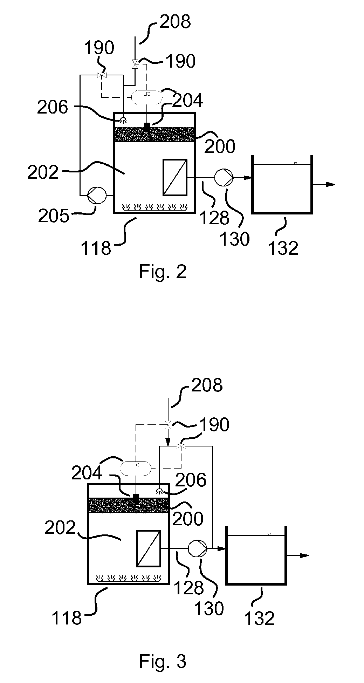

Die Figuren 2 bis 7 zeigen Varianten von Mitteln zur vollautomatischen Bekämpfung des in dem Bioreaktor 118 entstehenden Schaums 200.

Bei der in Fig. 2 dargestellten Variante können ein variabler Volumenstrom des Inhalts 202 des Bioreaktors 118 mittels der Pumpe 205 und ein variabler Volumenstrom von Frischwasser 208 mittels eines Sprühkopfs über den Schaum 200 gesprüht werden. Dies bewirkt eine mechanische Zerstörung des Schaums 200. Eine Schaumsonde 204 misst die Höhe des Schaums 200. Vorzugsweise wird dabei die Höhe der Oberkante des Schaums 200 relativ zu dem Bioreaktor 118 gemessen. Alternativ kann die Höhe der Oberkante des Schaums 200 relativ zu der Oberkante des aus Biomasse und Flüssigkeit bestehenden Inhalts 202 des Bioreaktors 118 gemessen werden. In Abhängigkeit von der Höhe des Schaums steuert die Schaumsonde 204 ein erstes und ein zweites Ventil 190.

Folgende Rohrleitungen sind in Fig. 2 dargestellt: Eine Rohrleitung zwischen dem Bioreaktor 118 und einer zwölften Pumpe 205, eine Rohrleitung zwischen letztgenannter Pumpe 130 und dem ersten Ventil 190, eine Rohrleitung zwischen dem ersten Ventil 190 und dem ersten Sprühkopf 206, eine Rohrleitung zwischen einer Zufuhr von Frischwasser 208 und dem zweiten Ventil 190, eine Rohrleitung zwischen dem zweiten Ventil 190 und dem ersten Sprühkopf 206, eine Rohrleitung zwischen der Membran des Bioreaktors 118 und der obengenannten vierten Pumpe 130 sowie eine Rohrleitung zwischen der obengenannten vierten Pumpe 130 und dem obengenannten zweiten Zwischenspeicher 132.

Eine ähnliche Anordnung stellt Fig. 3 dar. Im Unterschied zu Fig. 2 wird hier allerdings statt des Inhalts 202 des Bioreaktors 118 das Permeat 144 auf den Schaum 200 gesprüht. Die Schaumsonde 204 steuert ein erstes und ein zweites Ventil 190.

Folgende Rohrleitungen sind in Fig. 3 dargestellt: Eine Rohrleitung zwischen einer Zufuhr von Frischwasser 208 und einem ersten Ventil 168, eine Rohrleitung zwischen dem ersten Ventil 168 und dem ersten Sprühkopf 206, eine Rohrleitung zwischen der Membran des Bioreaktors 118 und der obengenannten vierten Pumpe 130, eine Rohrleitung zwischen der obengenannten vierten Pumpe 130 und dem obengenannten zweiten Zwischenspeicher 132, eine Rohrleitung zwischen der obengenannten vierten Pumpe 130 und einem zweiten Ventil 170 sowie eine Rohrleitung zwischen dem zweiten Ventil 170 und dem ersten Sprühkopf 206.

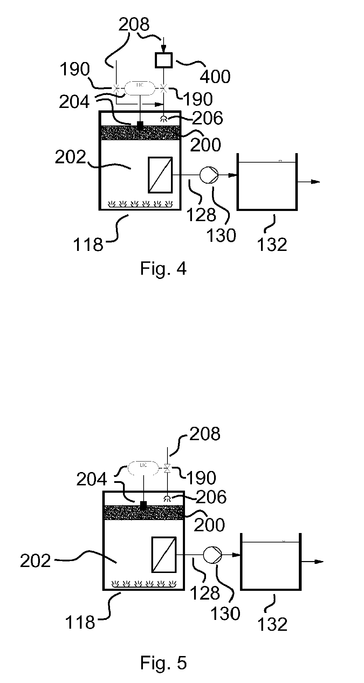

Die Anordnung in Fig. 4 ermöglicht es, dem Frischwasser Mittels einer Dosiervorrichtung 400 Entschäumer zuzugeben. Die Schaumsonde steuert hier wiederum ein erstes und ein zweites Ventil 170.

Folgende Rohrleitungen sind in Fig. 4 dargestellt: Eine Rohrleitung zwischen einer Zufuhr von Frischwasser 208 und einem ersten Ventil 190, eine Rohrleitung zwischen dem ersten Ventil 190 und dem ersten Sprühkopf 206, eine Rohrleitung zwischen einer Zufuhr von Frischwasser 208 und der Dosiervorrichtung 400 für Entschäumer, eine Rohrleitung zwischen der Dosiervorrichtung 400 für Entschäumer und dem zweiten Ventil 190, eine Rohrleitung zwischen dem zweiten Ventil 190 und dem ersten Sprühkopf 206, eine Rohrleitung zwischen der Membran des Bioreaktors 118 und der obengenannten vierten Pumpe 130 sowie eine Rohrleitung zwischen der obengenannten vierten Pumpe 130 und dem obengenannten zweiten Zwischenspeicher 132.

Möglich wäre ein Einsatz der Dosiervorrichtung 400 für den Entschäumer auch in Verbindung mit den in den Figuren 2, 3, 4 und 5 dargestellten Varianten.

Fig. 5 zeigt eine Bekämpfung des Schaums 200 ausschließlich mit Frischwasser 208. Die Schaumsonde 204 steuert ein einziges Ventil 190.

Folgende Rohrleitungen sind in Fig. 5 dargestellt: Eine Rohrleitung zwischen einer Zufuhr von Frischwasser 208 und dem Ventil 190, eine Rohrleitung zwischen dem Ventil 190 und dem ersten Sprühkopf 206, eine Rohrleitung zwischen der Membran des Bioreaktors 118 und der obengenannten vierten Pumpe 130 sowie eine Rohrleitung zwischen der obengenannten vierten Pumpe 130 und dem obengenannten zweiten Zwischenspeicher 132.

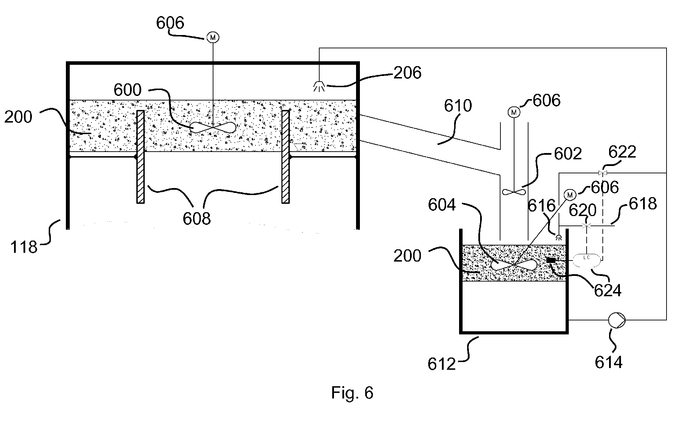

In Fig. 6 wird eine Ausführungsform mit einer ersten, einer zweiten und einer dritten beweglichen Vorrichtung 600, 602, 604 in Form eines drehbar gelagerten Schaufelrads zur mechanischen Zerstörung des Schaums 200 dargestellt. Je ein Motor 606 treibt die erste, die zweite und die dritte bewegliche Vorrichtung 600, 602, 604 an.

Die erste bewegliche Vorrichtung 600 ist so in dem Bioreaktor 118 angeordnet, dass sie in dem Schaum 200 rotiert. Ebenfalls in dem Bioreaktor befindet sich ein rotationssymmetrischer Spritzring 608, dessen Symmetrieachse mit der Drehachse der ersten beweglichen Vorrichtung 600 übereinstimmt und dessen Form einer linearen Extrusion eines Kreisrings entspricht. Eine Drehung der ersten beweglichen Vorrichtung 600 führt nun dazu, dass der Schaum 200 von den Schaufeln der Vorrichtung 600 gegen den Spritzring 608 geschleudert wird. Dabei führt sowohl der Kontakt des Schaums 200 mit den Schaufeln der Vorrichtung 600 als auch der Aufprall des Schaums 200 auf den Spritzring 608 zur Zerstörung des Schaums.

Es ist möglich, die in Fig. 6 gezeigte Ausführungsform des Bioreaktors 118, welche die erste bewegliche Vorrichtung 600 und den Spritzring 608 umfasst, mit den in Figuren 2 bis 5 dargestellten Mitteln zur Bekämpfung des in dem Bioreaktor 118 entstehenden Schaums 200 auszustatten. Fig. 6 bildet aber eine weitere Variante ab. Hierbei weist der Bioreaktor 118 in Höhe der ersten beweglichen Vorrichtung 600 ein Überlaufrohr 610 auf. Vorzugsweise ist das Überlaufrohr 610 oberhalb der ersten beweglichen Vorrichtung 600 derart angeordnet, dass die erste bewegliche Vorrichtung 600 und eine Öffnung zwischen dem Bioreaktor 118 und dem Überlaufrohr 610 sich auf verschiedenen Seiten einer horizontal verlaufenden Ebene befinden.

Ist die Schaumbildung in dem Bioreaktor 118 so stark, dass die bewegliche Vorrichtung und/oder die in den Figuren 2 bis 5 dargestellten Mittel zur Schaumbekämpfung nicht mehr ausreichen, steigt der Schaum 200 bis zu der Öffnung zwischen dem Bioreaktor 118 und dem Überlaufrohr 610. Dies führt dazu, dass der Schaum 200 in das Überlaufrohr 610 fließt in eine Schaumvorlage 612 abgeleitet wird.

Vorzugsweise verläuft zumindest ein Teil des Überlaufrohrs 610 senkrecht. In diesem Teil kann zur Zerstörung des Schaums 200 eine dritte bewegliche Vorrichtung 604 angeordnet sein.

Es ist möglich, die Schaumvorlage 612 mit den in den Figuren 2 bis 5 dargestellten Mitteln zur Zerstörung des Schaums 200 zu versehen. Vorzugsweise ist darüber hinaus zur Zerstörung des Schaums 200 eine dritte bewegliche Vorrichtung in der Schaumvorlage 612 angeordnet.

Durch die Zerstörung des Schaums 200 wird dieser zu einer Flüssigkeit. Eine dreizehnte Pumpe 614 fördert die in der Schaumvorlage 612 gesammelte Flüssigkeit in den Bioreaktor 118 zurück. Um die weitere Zerstörung des Schaums 200 zu fördern, wird ein erster Teil dieser Flüssigkeit mittels eines ersten Sprühkopfs 206 über dem in dem Bioreaktor 118 enthaltenen Schaum 200 gesprüht.

Mittels eines zweiten Sprühkopfs 616 wird ein zweiter Teil der Flüssigkeit in Abhängigkeit von der Höhe des in der Schaumvorlage 612 enthaltenen Schaums 200 über letztgenannten Schaum 200 gesprüht. Die Flüssigkeit kann dabei mit Frischwasser 618 verschnitten werden. Hierzu werden ein erstes und ein zweites Ventil 620, 622 durch eine Schaumsonde 624 gesteuert, welche die Höhe des in der Schaumvorlage 612 enthaltenen Schaums 200 misst.

Folgende Rohrleitungen sind in Fig. 6 dargestellt: Eine Rohrleitung zwischen einer Zufuhr von Frischwasser 618 und dem ersten Ventil 620, eine Rohrleitung zwischen dem ersten Ventil 620 und dem zweiten Sprühkopf 616, eine Rohrleitung zwischen der Schaumvorlage 612 und der Pumpe 614, eine Rohrleitung zwischen der Pumpe 614 und dem ersten Sprühkopf 206, eine Rohrleitung zwischen der Pumpe 614 und dem zweiten Ventil 622 sowie eine Rohrleitung zwischen dem zweiten Ventil 622 und dem zweiten Sprühkopf 616.

Die in Fig. 6 gezeigte drei Ausführungsformen zur mechanischen Schaumzerstörung können jeweils unabhängig voneinander oder in Kombination angewendet werden.

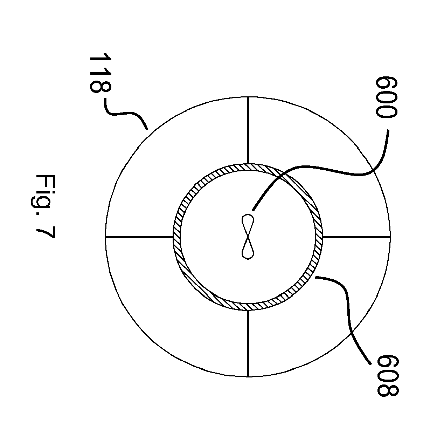

Fig. 7 zeigt einen horizontal verlaufenden Querschnitt durch den Bioreaktor 118. Dargestellt sind hier neben dem Bioreaktor 118 der Spritzring 608 und die erste bewegliche Vorrichtung 600.

### Bezugszeichen

- 100: Abwasser
- 102: Wäscherei
- 104: erste Pumpe
- 106: Trennvorrichtung
- 108: erster Ablauf
- 110: erster Wärmetauscher
- 112: zweiter Wärmetauscher
- 114: erster Zwischenspeicher
- 116: zweite Pumpe
- 118: Bioreaktor
- 120: dritter Wärmetauscher
- 122: dritte Pumpe
- 124: erster Frequenzumrichter
- 126: erster Temperaturfühler
- 128: Filtrat
- 130: vierte Pumpe
- 132: zweiter Zwischenspeicher
- 134: fünfte Pumpe
- 136: Waschwasser
- 138: erste Entkeimungsvorrichtung
- 140: sechste Pumpe
- 142: Membranfiltrationseinheit
- 144: Permeat
- 146: Konzentrat
- 148: dritter Zwischenspeicher
- 150: zweiter Ablauf
- 152: vierter Zwischenspeicher
- 154: neunte Pumpe
- 156: zweite Entkeimungsvorrichtung
- 158: erster wärmeisolierter Tank
- 160: zehnte Pumpe
- 162: zweiter Frequenzumrichter
- 164: zweiter Temperaturfühler
- 166: Füllstandssonde
- 168: erstes Ventil
- 170: zweites Ventil
- 172: dritter Ablauf
- 174: Frischwasser
- 176: Dosiervorrichtung für Enthärter
- 178: elfte Pumpe
- 180: Spülwasser
- 182: dritter Frequenzumrichter
- 184: Leitfähigkeitsmesser
- 186: drittes Ventil
- 188: siebte Pumpe
- 190: Ventil
- 192: achte Pumpe
- 194: Ionentauscher
- 200: Schaum
- 202: Inhalt des Bioreaktors
- 204: Schaumsonde
- 205: zwölfte Pumpe
- 206: Sprühkopf
- 208: Frischwasser
- 400: Dosiervorrichtung für Entschäumer
- 600: erste bewegliche Vorrichtung
- 602: zweite bewegliche Vorrichtung
- 604: dritte bewegliche Vorrichtung
- 606: Motor
- 608: Spritzring
- 610: Überlaufrohr
- 612: Schaumvorlage
- 614: dreizehnte Pumpe
- 616: zweiter Sprühkopf
- 618: Frischwasser
- 620: erstes Ventil
- 622: zweites Ventil
- 624: Schaumsonde

### zitierte Literatur

WO 02/04354 A1

## Patentansprüche

1. Vorrichtung zur Behandlung von Abwasser (100) einer Wäscherei (102) mit:
a) einem ersten Wärmetauscher (110) zum Abkühlen des Abwassers (100);
b) einem Bioreaktor (118) zur Behandlung des Abwassers (100);
c) Mitteln zur Rückführung eines variablen ersten Anteils eines durch die Behandlung mittels des Bioreaktors (118) gewonnenen Filtrats (128) zur Wiederverwendung als Waschwasser (136) in die Wäscherei (102);
d) einer Membranfiltrationseinheit (142) zum Reinigen eines variablen zweiten Anteils des Filtrats (128) mittels Umkehrosmose; und
e) Mitteln zur Rückführung eines durch die Umkehrosmose gewonnenen Permeats (144) zur Wiederverwendung als Spülwasser (180) in die Wäscherei (102);
**gekennzeichnet durch**,
f) einen ersten wärmeisolierten Tank (158), in dem das Waschwasser (136) oder das Spülwasser (180) zwischengespeichert wird;
g) Mittel, mittels derer das in dem ersten wärmeisolierten Tank (158) zwischengespeicherte Waschwasser (136) und/oder Spülwasser (180) mittels Zirkulation **durch** den ersten Wärmetauscher (110) erwärmt wird;
h) Mittel, mittels derer das Permeat (144) vor der Wiederverwendung als Spülwasser (180) mit einem variablen dritten Anteils des Filtrats (128) verschnitten wird;
i) einen Leitfähigkeitsmesser (184), der es ermöglicht, den Volumenstrom des variablen dritten Anteils des Filtrats (128) in Abhängigkeit von einer mittels des Leitfähigkeitsmessers (184) ermittelten Leitfähigkeit des Spülwassers (180) derart zu variieren, dass die Leitfähigkeit des Spülwassers (180) zwischen 100 und 1500 µS/cm beträgt; und **durch**
k) eine Schaumzerstörungs-Einrichtung, die derart ausgebildet ist, dass der in dem Bioreaktor (118) entstehende Schaum (200) **durch** Aufsprühen des Abwassers (100) und/oder **durch** Aufsprühen eines variablen vierten Anteils des Filtrats (128) und/oder **durch** Aufsprühen von Frischwasser (136) und/oder **durch** Regelung der Belüftung des Bioreaktors (118) und/oder **durch** mechanische Zerstörung mittels mindestens einer beweglichen Vorrichtung (600) und/oder **durch** Aufsprühen eines Entschäumers bekämpft wird.

2. Vorrichtung nach dem vorhergehenden Anspruch,
**dadurch gekennzeichnet, dass**
a) das Abwasser (100) mittels eines zweiten Wärmetauschers (40) abgekühlt wird; und dass
b) das Spülwasser (180) oder das Waschwasser (136) mittels des zweiten Wärmetauschers (112) erwärmt wird.

3. Vorrichtung nach dem vorhergehenden Anspruch,
**dadurch gekennzeichnet, dass**
a) das Spülwasser (180) in dem ersten wärmeisolierten Tank (158) und das Waschwasser (136) in einem zweiten wärmeisolierten Tank zwischengespeichert wird; und dass
b) das in dem zweiten wärmeisolierten Tank zwischengespeicherte Waschwasser (136) mittels Zirkulation durch den zweiten Wärmetauscher (112) erwärmt wird.

4. Vorrichtung nach einem der vorhergehenden Ansprüche, **dadurch gekennzeichnet, dass**
a) bei zu hohem Pegelstand des ersten wärmeisolierten Tanks (158) Spülwasser (180) ausgeleitet wird; und dass
b) bei zu niedrigem Pegelstand des ersten wärmeisolierten Tanks (158) Frischwasser (174) zugeführt wird.

5. Verfahren zur Behandlung von Abwasser (100) einer Wäscherei (102) mit folgenden Schritten:
a) Abkühlen des Abwassers (100) mittels eines ersten Wärmetauschers (110);
b) Behandlung des Abwassers (100) mittels eines Bioreaktors (118);
c) Rückführung eines variablen ersten Anteils eines durch die Behandlung mittels des Bioreaktors (118) gewonnenen Filtrats (128) zur Wiederverwendung als Waschwasser (136) in die Wäscherei (102);
d) Reinigen eines variablen zweiten Anteils des Filtrats (128) mittels Umkehrosmose; und
e) Rückführung eines durch die Umkehrosmose gewonnenen Permeats (144) zur Wiederverwendung als Spülwasser (180) in die Wäscherei (102);
**dadurch gekennzeichnet,**
f) **dass** das Waschwasser (136) oder das Spülwasser (180) in einem ersten wärmeisolierten Tank (158) zwischengespeichert wird;
g) **dass** das in dem ersten wärmeisolierten Tank (158) zwischengespeicherte Waschwasser (136) bzw. Spülwasser (180) mittels Zirkulation durch den ersten Wärmetauscher (110) erwärmt wird;
h) **dass** das Permeat (144) vor der Wiederverwendung als Spülwasser (180) mit einem variablen dritten Anteils des Filtrats (128) verschnitten wird;
i) **dass** der Volumenstrom des variablen dritten Anteils des Filtrats (128) in Abhängigkeit von einer mittels eines Leitfähigkeitsmessers (184) ermittelten Leitfähigkeit des Spülwassers (180) derart variiert wird, dass die Leitfähigkeit des Spülwassers (180) zwischen 100 und 1500 µS/cm beträgt; und
k) **dass** der in dem Bioreaktor (118) entstehende Schaum (200) durch Aufsprühen des Abwassers (100) und/oder durch Aufsprühen von Filtrat (146) und/oder durch Aufsprühen von Frischwasser (174) und/oder durch Regelung der Belüftung des Bioreaktors (118) und/oder durch mechanische Zerstörung mittels mindestens einer beweglichen Vorrichtung (600) und/oder durch Aufsprühen eines Entschäumers bekämpft wird.
